# EUROPÄISCHE PATENTSCHRIFT

(11) **EP 2 654 169 B1**
(45) Veröffentlichungstag und Bekanntmachung des Hinweises auf die Patenterteilung: **05.06.2019**
(21) Anmeldenummer: 13163262.2
(22) Anmeldetag: 11.04.2013
(51) Int. Cl.: H02J 7/00, B60L 11/18

(54) **Ladevorrichtung für ein Elektrofahrzeug**
Charger for an electric vehicle
Dispositif de chargement pour un véhicule électrique

(30) Priorität: 18.04.2012 DE 102012007616
(43) Veröffentlichungstag der Anmeldung: 23.10.2013
(73) Patentinhaber: PHOENIX CONTACT GmbH & Co. KG, 32825 Blomberg (DE)
(72) Erfinder: Temme, Thorsten, 30459 Hannover (DE); Jankowski, Martin, 30926 Seelze (DE)
(74) Vertreter: Patentship Patentanwaltsgesellschaft mbH

(56) Entgegenhaltungen:
- EP-A2- 2 148 405
- WO-A2-2012/013239
- US-A- 5 349 535
- US-A1- 2007 069 734

## Beschreibung

Die vorliegende Erfindung betrifft eine Ladevorrichtung für einen Energiespeicher, insbesondere in einem elektrisch betreibbaren Fahrzeug.

Aus der US 2007/069734 A1 ist eine Diagnosevorrichtung für ein Kraftfahrzeugelektriksystem bekannt.

Die WO 2012/013239 A2 zeigt ein Verfahren zum Protokollieren einer elektrischen Ladevorrichtung für ein Elektrofahrzeug auf einen Verwaltungsrechner.

Die EP 2 148 405 A2 zeigt eine Informationsumschreibevorrichtung die eine erste Speichereinheit in einer Batterie und eine zweite Speichereinheit in einem Batterieladegerät umfasst.

Die US 5 349 535 A betrifft ein System zum Überwachen und Aufnehmen eines Batteriezustands.

Aus der US 7 079 038 B2 sind ein Verfahren und ein Gerät zur Kommunikation zwischen einem elektronischen Gerät und einer verbundenen Batterie bekannt.

Es ist die Aufgabe der vorliegenden Erfindung, die technischen Konfigurationsmöglichkeiten und Kombinationsmöglichkeiten einzelner Komponenten einer Ladevorrichtung zu erhöhen.

Diese Aufgabe wird durch einen Gegenstand mit den Merkmalen nach dem unabhängigen Anspruch gelöst. Vorteilhafte Weiterbildungsformen sind Gegenstand der abhängigen Ansprüche, der Beschreibung und der Zeichnungen.

Die vorliegende Erfindung basiert auf der Erkenntnis, dass es vorteilhaft ist, in einer Ladevorrichtung unterschiedliche Messeinrichtungen zum Bestimmen einer übertragenen Energiemenge anbinden oder verwenden zu können.

Gemäß einem Aspekt wird die erfindungsgemäße Aufgabe durch eine Ladevorrichtung zum Laden eines Energiespeichers gelöst, mit einer Messeinrichtung zum Erfassen von ersten Messdaten über einen Ladevorgang, wobei die Messeinrichtung ausgebildet ist, die ersten Messdaten unter Berücksichtigung von hersteller- und typspezifischen Befehls- und Datenformaten zu erfassen; und einer Steuereinrichtung, die ausgebildet ist, die ersten Messdaten in zweite Messdaten gemäß einem vorgegebenen Messdatenformat zu überführen. Hierbei ist die Messeinrichtung über eine Kommunikationsschnittstelle und ein Kommunikationsprotokoll an die Steuereinrichtung angebunden und die Steuereinrichtung ist ausgebildet, die zweiten Messdaten unabhängig von der Kommunikationsschnittstelle und dem Kommunikationsprotokoll bereitzustellen, wobei die Steuereinrichtung einen nicht-flüchtigen Speicher mit einer Vielzahl von Datensätzen umfasst, von denen jeder eine Umwandlungsregel für ein Messgerät angibt. Die Steuereinrichtung ist ausgebildet, die ersten Messdaten in zweite Messdaten gemäß einer Umwandlungsregel umzuwandeln, die in einem Datensatz angegeben ist.

Dadurch wird beispielsweise der technische Vorteil erreicht, dass sich Messeinrichtungen unterschiedlicher Hersteller in Kombination mit der Steuereinrichtung verwenden lassen und eine zuverlässige und fehlerfreie Übertragung eines Messewertes zwischen Messeinrichtung und Steuereinrichtung sichergestellt werden kann.

Durch die Umwandlung der ersten Messdaten in zweite Messdaten gemäß einer Umwandlungsregel, die in einem Datensatz angegeben ist, wird beispielsweise der technische Vorteil erreicht, dass die Steuereinrichtung flexibel und mit geringem Aufwand an unterschiedliche Messeinrichtungen angepasst werden kann.

Durch den nicht-flüchtigen Speicher mit einer Vielzahl von Datensätzen, von denen jeder eine Umwandungsregel für ein Messgerät angibt, wird beispielsweise der technische Vorteil erreicht, dass eine Vielzahl von Konfigurationsdatensätzen zur Konfiguration der Steuereinrichtung auch ohne Verbindung zu einem Datennetzwerk zur Verfügung steht.

In einer vorteilhaften Ausführungsform ist die Steuereinrichtung ausgebildet, die zweiten Messdaten in einem Speicher an einer vorbestimmten Speicheradresse abzulegen. Dadurch wird beispielsweise der technische Vorteil erreicht, dass die Steuereinrichtung schnell und mit geringem technischem Aufwand auf die abgelegten Messdaten zugreifen kann.

In einer weiteren vorteilhaften Ausführungsform umfasst die Steuereinrichtung eine Schnittstelle zum Übertragen des Datensatzes an die Steuereinrichtung. Dadurch wird beispielsweise der technische Vorteil erreicht, dass ein aktueller Datensatz verwendet werden kann.

In einer weiteren vorteilhaften Ausführungsform umfasst die Steuereinrichtung einen Mikroprozessor zum Verarbeiten des Datensatzes, um die in dem Datensatz angegebene Umwandlungsregel zu erhalten. Dadurch wird beispielsweise der technische Vorteil erreicht, dass eine anpassbare und flexible Umwandlung von Messdaten, auf der Basis eines Datenssatzes erfolgt.

In einer weiteren vorteilhaften Ausführungsform umfasst die Steuereinrichtung einen Speicher zum Speichern des Datensatzes. Dadurch wird beispielsweise der technische Vorteil erreicht, dass der Datensatz und die zugehörige Umwandlungsregel in der Steuereinrichtung gespeichert werden können.

In einer weiteren vorteilhaften Ausführungsform umfasst die Steuereinrichtung einen Web-Server zum Angeben der Umwandlungsregel. Dadurch wird beispielsweise der technische Vorteil erreicht, dass sich die Steuereinrichtung und die Umwandlungsregel besonders benutzerfreundlich über einen Browser konfigurieren lassen.

In einer weiteren vorteilhaften Ausführungsform ist die Steuereinrichtung ausgebildet, einen ersten Steuerbefehl gemäß einer Umwandlungsregel in einen zweiten Steuerbefehl zum Steuern der Messeinrichtung umzuwandeln und den zweiten Steuerbefehl an die Messeinrichtung zu übertragen. Dadurch wird beispielsweise der technische Vorteil erreicht, dass die Steuereinrichtung unterschiedliche Messeinrichtungen steuern kann und bestimmte Informationen von der Messeinrichtung abrufen kann.

In einer weiteren vorteilhaften Ausführungsform ist der erste Steuerbefehl ein Steuerbefehl zum Abrufen einer Identifikationsinformation des Messgerätes. Dadurch wird beispielsweise der technische Vorteil erreicht, dass die Steuereinrichtung ein Modell, einen Typ, einen Hersteller oder eine Bauart der Messeinrichtung ermitteln kann.

In einer weiteren vorteilhaften Ausführungsform ist die Steuereinrichtung ausgebildet, der Identifikationsinformation einen Datensatz zuzuordnen. Dadurch wird beispielsweise der technische Vorteil erreicht, dass die Steuereinrichtung automatisch ohne Verbindung mit einem Datennetzwerk angepasst werden kann.

In einer weiteren vorteilhaften Ausführungsform ist der erste Steuerbefehl ein Steuerbefehl zum Abrufen der ersten Messdaten aus dem Messgerät. Dadurch wird beispielsweise der technische Vorteil erreicht, dass die ersten Messdaten auf Anforderung an die Steuereinrichtung übertragen werden können.

In einer weiteren vorteilhaften Ausführungsform umfassen die ersten Messdaten eine Information über einen Ladestrom, eine Ladespannung oder einen Energiezählerwert. Dadurch wird beispielsweise der technische Vorteil erreicht, dass geeignete Daten zur Ermittlung einer übertragenen Energiemenge übermittelt werden.

In einer weiteren vorteilhaften Ausführungsform umfasst die Steuereinrichtung eine Internetschnittstelle zum Abrufen eines Datensatzes über das Internet. Dadurch wird beispielsweise der technische Vorteil erreicht, dass die Steuereinrichtung aktuelle Datensätze mit Umwandlungsregeln aus dem Internet abrufen kann.
In einer weiteren vorteilhaften Ausführungsform ist der Datensatz eine strukturierte Textdatei. Dadurch wird beispielsweise der technische Vorteil erreicht, dass die sich die Umwandlungsregeln leicht erstellen, anpassen oder verändern lassen, beispielsweise auf einem Texteditor.

Weitere Ausführungsbeispiele werden Bezug nehmend auf die beiliegende Zeichnung erläutert. Es zeigt:

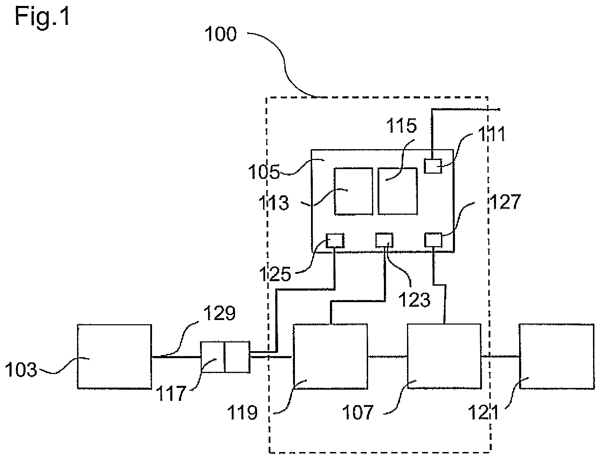

Fig. 1 eine schematische Ansicht einer erfindungsgemäßen Ladevorrichtung mit einem angeschlossenen Fahrzeug und einer Energieversorgung.

Fig. 1 zeigt eine Ladevorrichtung 100, die ein Steuergerät 105 zum Steuern eines Ladevorgangs von Elektrofahrzeugen 103, ein Schaltgerät oder Schütz 119 und ein Messgerät 107 zum Bestimmen einer an das Elektrofahrzeug übertragenen Energiemenge umfasst. Das Steuergerät 105 umfasst einen Mikroprozessor 113 und einen Speicher 115. Weiter umfasst das Steuergerät 105 die Schnittstellen 111, 123, 125 und 127. Die Schnittstelle 123 dient zum Verbinden des Steuergerätes 105 mit der Schaltvorrichtung 119. Die Schnittstelle 125 dient zum Verbinden des Steuergerätes 105 mit einer Schnittstelle 117 für die Fahrzeug-Ladeinfrastruktur. Die Schnittstelle 127 dient zum Verbinden des Steuergerätes 105 mit dem Messgerät 107 und die Schnittstelle 111 dient zum Verbinden des Steuergerätes 105 mit einem Datennetzwerk, wie beispielsweise dem Internet. Eine Energiequelle 121, wie beispielsweise das öffentliche Stromnetz, stellt die zum Laden des Elektrofahrzeugs 103 benötige Energie bereit, die dem Elektrofahrzeug 103 über ein Ladekabel 129 zugeführt wird. Elektrofahrzeuge 103 sind beispielsweise Fahrzeuge mit Hybridantrieb oder rein batterieelektrisch betriebene Fahrzeuge.

Das Laden dieser Elektrofahrzeuge 103 kann an einem Wechsel- oder Gleichstromnetz erfolgen. Die Anforderungen an den Ladevorgang und die Schnittstellen werden in verschiedenen Normen definiert, wie beispielsweise IEC 61851, IEC 62196, SAE J1772, GBfT 20234-2006.

In diesen Normen sind unterschiedliche Maßnahmen definiert, mit denen der gesteckte Ladestecker am Fahrzeug und/oder der Ladestation erkannt werden kann, die Stromtragfähigkeit der Ladekabelgarnitur erkannt wird, die durchgängige Verbindung des Schutzleiters mit dem Fahrzeug geprüft wird, der Status des Elektrofahrzeugs an die Ladestation übertragen werden kann, die Ladestation dem Fahrzeug einen maximal aus dem Netz zur Verfügung stehenden Ladestrom vorgeben kann und die Ladestation dem Fahrzeug erweiterte serielle Kommunikation zum Austausch von Daten anbietet.

Für die Umsetzung dieser Maßnahmen sind typischerweise nach den oben genannten Normen ein oder mehrere spezielle Signalkontakte in der Verbindung zwischen Fahrzeug und Ladestation vorgesehen.

Zur Ansteuerung dieser Signalkontakte dient das Steuergerät 105, das mit weiteren Komponenten der Ladestation 100 für Elektrofahrzeuge 103 zusammengesetzt werden kann, wie beispielsweise einer Messvorrichtung 107.

Nachdem das Elektrofahrzeug 103 und die Ladestation 100 durch entsprechend normierte Signale und Aktionen (Handshake) den Ladevorgang freigegeben haben, wird ein Signal zur Verfügung gestellt, mit dem das Fahrzeug mit der Energiequelle 121, wie beispielsweise dem Stromnetz, über ein Schaltgerät oder Schütz 119, verbunden wird. Sobald die für den Ladevorgang notwendigen Bedingungen nicht mehr erfüllt sind, wird das Elektrofahrzeug 103 wieder von der Energiequelle 121 getrennt. Dadurch werden der Start und der Stopp des Ladevorgangs von dem Steuergerät 105 kontrolliert.

Beim Laden des Elektrofahrzeugs 103 werden zu Überwachungs- oder Abrechnungszwecken Messwerte, wie beispielsweise ein gegenwärtiger Ladestrom, eine gegenwärtige Ladespannung, eine gegenwärtige Ladeleistung, ein Zählerstand eines Energiezählers zu Beginn des Ladevorgangs, eine in dem jeweiligen Ladevorgang bereits übertragene Energiemenge und/oder ein Zählerstand eines Energiezählers am Ende eines Ladevorgangs erfasst.

Zu diesem Zweck ist das Steuerungsgerät 105 mit mindestens einer Kommunikationsschnittstelle 123 ausgestattet, an die das Messgerät 107 angeschlossen wird, das die oben genannten Messwerte und -Daten in einem spezifischen Format bereitstellen kann.

Über die gleiche oder eine weitere, separate Kommunikationsschnittstelle 111 kann auf das Steuergerät 105 für den Ladevorgang von einer übergeordneten Steuerung oder Leittechnik aus während des Betriebes oder zur Inbetriebnahme zugegriffen werden, so dass diese Messwerte weitergeleitet werden können.

Der Anschluss des Messgerätes 107 an das Steuergerät 105 erfolgt über standardisierte, serielle Schnittstellen, wie beispielsweise RS485, und/oder über standardisierte Kommunikationsprotokolle, wie beispielsweise Modbus RTU. Im Allgemeinen werden für die Anbindung des Messgerätes 107 verschiedene Kommunikationsschnittstellen und -Protokolle verwendet. Im Allgemeinen ist das verwendete Protokoll oder die Schnittstelle nicht auf eine bestimmte Schnittstelle begrenzt.

Um die gewünschten Messdaten aus dem Messgerät 107 auslesen und verarbeiten zu können, sind daher hersteller- und typspezifische Befehls- und Datenformate zu berücksichtigen. Dies betrifft zum Beispiel das Datenformat in dem ein Wert dargestellt wird, ein Befehlsformat in dem ein bestimmter Wert vom Messgerät gesendet wird oder eine Registeradresse, an der ein bestimmter Messwert ausgelesen werden kann.

Erfindungsgemäß werden die relevanten Daten wie beispielsweise Ladeströme, Ladespannungen oder Energiezählerwerte im Steuerungsgerät 105 unabhängig vom verwendeten Messgerät 107 und dessen Schnittstelle und Protokoll bereitgestellt, so dass im Steuergerät 107 eine Weiterverarbeitung erfolgen kann oder die Daten an eine übergeordnete Steuerung oder Leittechnik weitergeben werden können.

Dazu ist das Steuergerät 105 ausgebildet, die von dem Messgerät 107 über die Schnittstelle 127 empfangenen Daten in ein Format umzuwandeln, das von dem Steuergerät 105 verarbeitet werden kann. Beispielsweise kann das Messgerät 107 die Daten eines Energiezählerstandes in einem ersten Datenformat an die Steuereinrichtung 105 übertragen. Die Steuereinrichtung 105 empfängt die Daten über den Energiezählerstand und wandelt diese in ein Datenformat um, das von der Steuereinrichtung 105 verarbeitet werden kann.

Um verschiedene Messgeräte 107 verwenden zu können ist die Steuereinrichtung 105 frei konfigurierbar, so dass diese an eine Vielzahl unterschiedlicher Messgeräte 107 mit entsprechenden Schnittstellen und Datenformaten angepasst werden kann. Diese Anpassung kann beispielsweise unter Verwendung eines Steuerprogramms, das die Messdaten von einem ersten Format in ein zweites Format umwandelt oder unter Verwendung eines Konfigurationsdatensatzes erfolgen, in dem eine Umrechnungsregel für die Messdaten angegeben ist.

Die Steuereinrichtung 105 kann nicht nur die von dem Messgerät 107 empfangenen Daten in ein Format umwandeln, das von dem Steuergerät verarbeitet werden kann, sondern kann ebenfalls ausgebildet sein, Daten oder Befehle von dem Steuergerät 105 in ein für das Messgerät 107 geeignetes Format umzuwandeln und an dieses weiterzuleiten.

Beispielsweise kann ein von dem Steuergerät 105 gesendeter Befehl zum Auslesen eines Zählerstandes in ein Format umgewandelt werden, dass den Vorgaben eines Herstellers des Messgerätes 107 entspricht.

Zur Konfiguration des Steuergerätes 105 kann beispielsweise ein Datensatz abgelegt werden, der eine Regel umfasst, wie die ersten Messdaten in die zweiten Messdaten umzuwandeln sind. Daneben kann der Datensatz eine Information über eine Registeradresse umfassen, an der die jeweiligen Daten aus dem Messgerät 107 auslesbar sind. Weiter kann der Datensatz das Protokoll spezifizieren, das für eine Kommunikation zwischen dem Steuergerät und dem Messgerät verwendet wird. Daneben kann der Datensatz Informationen über die in dem Messgerät ausführbaren Steuerbefehle umfassen und in welcher Art diese Steuerbefehlen entsprechen, die in dem Steuergerät verwendet werden. Diese Information kann beispielsweise in der Form einer Abbildungs- oder Zuordnungstabelle vorliegen. Weiter kann der Datensatz eine Umrechnungsformel oder einen Umrechnungsfaktor umfassen, anhand der die Messdaten in dem Messgerät 107 derart umgerechnet werden können, dass diese von dem Steuergerät 105 weiterverarbeitet werden können. Beispielsweise kann angegeben werden, dass eine von dem Messgerät ermittelte Übertragungseinheit einer bestimmten Energiemenge entspricht.

Im Allgemeinen können in dem Datensatz alle Informationen gespeichert werden, die eine Umrechnung und eine Umwandlung von Daten und Befehlen zwischen dem Steuergerät und dem Messgerät erlauben.

Der Datensatz zum Auslesen, Umrechnen und Ablegen der Daten aus dem Messgerät 107 kann beispielsweise während des Aufbaus oder der Inbetriebnahme der Ladestation über eine der Kommunikationsschnittstellen 111, 123, 125 oder 127 an das Steuergerät 105 übertragen werden.

In einer vorteilhaften Ausführungsform umfasst der Speicher 115 eine Vielzahl von einzelnen Datensätzen für unterschiedliche Messgeräte 107, aus denen dann beispielsweise bei der Herstellung der Ladestation derjenige ausgewählt wird, der für das verwendete Messgerät 107 eine geeignete Datenumwandlung erzeugt.

In einer weiteren Ausführungsform sendet das Steuergerät 105 an das Messgerät 107 einen Befehl, auf den hin das Messgerät 107 Identifikationsdaten an das Steuergerät 107 sendet. In einem Speicher 115 des Steuergerätes 107 befindet sich eine Vielzahl von Identifikationsdaten für unterschiedliche Messgeräte 107, die jeweils einem entsprechenden Datensatz zugeordnet sind. Durch einen Vergleich der gespeicherten Identifikationsdaten mit den Identifikationsdaten, die von dem Messgerät 107 gesendet worden sind, ist es möglich, aus dem Speicher 115 automatisch denjenigen Datensatz auszuwählen, der zu einer geeigneten Umwandlung der Daten zwischen dem Messgerät 107 und dem Steuergerät 105 führt. Sollte im Speicher 115 keine Identifikationskennung gefunden werden, die der von dem Messgerät 107 gesendeten Identifikationskennung entspricht, kann eine Anfrage über eine Internetschnittstelle 111 an eine entsprechende Datenbank im Internet gesendet werden. Auf diese Anfrage hin kann dann der Datensatz heruntergeladen und in dem Steuergerät 105 installiert oder gespeichert werden.

In einer Ausführungsform wird der Datensatz als strukturierte Textdatei, zum Beispiel im XML-Format, an das Steuergerät 105 zu übertragen. Die Textdatei stellt den Datensatz in Form von hierarchisch strukturierten Daten dar und kann für den plattform- und implementationsunabhängigen Austausch von Datensätzen zwischen Steuergeräten eingesetzt werden.

In einer weiteren Ausführungsform verfügt das Steuergerät 105 über einen eigenen Web-Server, der es ermöglicht, die Daten über eine vom Steuergerät 105 bereitgestellte Web-Seite und mittels beliebiger auf einem externen Computer installierten Web-Browser manuell einzugeben und so die Schnittstelle 127 zu konfigurieren.

Alle in der Beschreibung erläuterten und in den Zeichnungen dargestellten Merkmale können in beliebiger, sinnvoller Weise miteinander kombiniert werden, um gleichzeitig deren vorteilhafte Wirkungen zu erzielen.

### BEZUGSZEICHENLISTE

- 100: Ladevorrichtung
- 103: Kraftfahrzeug
- 105: Steuereinrichtung/Steuergerät
- 107: Messeinrichtung/Messgerät
- 111: Schnittstelle
- 113: Mikroprozessor
- 115: Speicher
- 117: Schnittstelle
- 119: Schaltvorrichtung
- 121: Energieversorgung
- 123: Schnittstelle
- 125: Signalschnittstelle
- 127: Schnittstelle
- 129: Ladekabel

## Patentansprüche

1. Ladevorrichtung (100) zum Laden eines Energiespeichers, mit:
einer Messeinrichtung (107) zum Erfassen von ersten Messdaten über einen Ladevorgang, wobei die Messeinrichtung (107) ausgebildet ist, die ersten Messdaten unter Berücksichtigung von hersteller- und typspezifischen Befehls- und Datenformaten zu erfassen; und
einer Steuereinrichtung (105), die ausgebildet ist, die ersten Messdaten in zweite Messdaten gemäß einem vorgegebenen Messdatenformat zu überführen,
wobei die Messeinrichtung (107) über eine Kommunikationsschnittstelle (127) und ein Kommunikationsprotokoll an die Steuereinrichtung (105) angebunden ist, und wobei die Steuereinrichtung (105) ausgebildet ist, die zweiten Messdaten unabhängig von der Kommunikationsschnittstelle (127) und dem Kommunikationsprotokoll bereitzustellen,
wobei die Steuereinrichtung (105) einen nicht-flüchtigen Speicher (115) mit einer Vielzahl von Datensätzen umfasst, von denen jeder eine Umwandlungsregel für ein Messgerät (107) angibt,
wobei die Steuereinrichtung (105) ausgebildet ist, die ersten Messdaten in zweite Messdaten gemäß einer Umwandlungsregel umzuwandeln, die in einem Datensatz angegeben ist.

2. Ladevorrichtung (100) nach Anspruch 1, wobei die Steuereinrichtung (105) ausgebildet ist, die zweiten Messdaten in einem Speicher (115) an einer vorbestimmten Speicheradresse abzulegen.

3. Ladevorrichtung (100) nach einem der vorangehenden Ansprüche, wobei die Steuereinrichtung (105) eine Schnittstelle (111) zum Übertragen des Datensatzes an die Steuereinrichtung (105) umfasst.

4. Ladevorrichtung (100) nach einem der vorangehenden Ansprüche , wobei die Steuereinrichtung (105) einen Mikroprozessor zum Verarbeiten des Datensatzes umfasst, um die in dem Datensatz angegebene Umwandlungsregel zu erhalten.

5. Ladevorrichtung (100) nach einem der vorangehenden Ansprüche , wobei die Steuereinrichtung (105) einen Speicher (115) zum Speichern des Datensatzes umfasst.

6. Ladevorrichtung (100) nach einem der vorangehenden Ansprüche , wobei die Steuereinrichtung (105) einen Web-Server zum Angeben der Umwandlungsregel umfasst.

7. Ladevorrichtung (100) nach einem der vorangehenden Ansprüche, wobei die Steuereinrichtung (105) ausgebildet ist, einen ersten Steuerbefehl gemäß einer Umwandlungsregel in einen zweiten Steuerbefehl zum Steuern der Messeinrichtung (107) umzuwandeln und den zweiten Steuerbefehl an die Messeinrichtung (107) zu übertragen.

8. Ladevorrichtung nach Anspruch 7, wobei der erste Steuerbefehl ein Steuerbefehl zum Abrufen einer Identifikationsinformation des Messgerätes (107) ist.

9. Ladevorrichtung (100) nach Anspruch 8, wobei die Steuereinrichtung (105) ausgebildet ist, der Identifikationsinformation einen Datensatz zuzuordnen.

10. Ladevorrichtung (100) nach Anspruch 7, wobei der erste Steuerbefehl ein Steuerbefehl zum Abrufen der ersten Messdaten aus dem Messgerät (107) ist.

11. Ladevorrichtung (100) nach einem der vorangehenden Ansprüche, wobei die ersten Messdaten eine Information über einen Ladestrom, eine Ladespannung oder einen Energiezählerwert umfassen.

12. Ladevorrichtung (100) nach einem der vorangehenden Ansprüche, wobei die Steuereinrichtung (105) eine Internetschnittstelle (111) zum Abrufen eines Datensatzes über das Internet umfasst.

13. Ladevorrichtung (100) nach einen der vorangehenden Ansprüche, wobei der Datensatz eine strukturierte Textdatei ist.

## Claims

1. Charger (100) for charging an energy store, comprising:
a measuring device (107) for acquiring first measurement data relating to a charging process, wherein the measuring device (107) is configured to acquire the first measurement data while taking account of manufacturer-specific and type-specific command formats and data formats; and
a control device (105) which is configured to convert the first measurement data into second measurement data according to a predefined measurement data format,
wherein the measuring device (107) is connected to the control device (105) via a communication interface (127) and a communication protocol, and wherein the control device (105) is configured to provide the second measurement data independently of the communication interface (127) and the communication protocol,
wherein the control device (105) comprises a non-volatile memory (115) containing a plurality of data sets, each of which specifies a conversion rule for a measuring device (107),
wherein the control device (105) is configured to convert the first measurement data into second measurement data according to a conversion rule that is specified in a data set.

2. Charger (100) according to claim 1, wherein the control device (105) is configured to store the second measurement data in a memory (115) at a predetermined memory address.

3. Charger (100) according to one of the preceding claims, wherein the control device (105) comprises an interface (111) for transmitting the data set to the control device (105).

4. Charger (100) according to one of the preceding claims, wherein the control device (105) comprises a microprocessor for processing the data set in order to obtain the conversion rule specified in the data set.

5. Charger (100) according to one of the preceding claims, wherein the control device (105) comprises a memory (115) for storing the data set.

6. Charger (100) according to one of the preceding claims, wherein the control device (105) comprises a web server for specifying the conversion rules.

7. Charger (100) according to one of the preceding claims, wherein the control device (105) is configured to convert a first control command according to a conversion rule into a second control command for controlling the measuring device (107), and to transmit the second control command to the measuring device (107).

8. Charger according to claim 7, wherein the first control command is a control command to retrieve identification information from the measuring device (107).

9. Charger (100) according to claim 8, wherein the control device (105) is configured to assign a data set to the identification information.

10. Charger (100) according to claim 7, wherein the first control command is a control command to retrieve the first measurement data from the measuring device (107).

11. Charger (100) according to one of the preceding claims, wherein the first measurement data comprise information relating to a charging current, a charging voltage or an energy counter value.

12. Charger (100) according to one of the preceding claims, wherein the control device (105) comprises an Internet interface (111) for retrieving a data set via the Internet.

13. Charger (100) according to one of the preceding claims, wherein the data set is a structured text file.

## Revendications

1. Dispositif de charge (100) pour la charge d'un accumulateur d'énergie, comprenant :
un dispositif de mesure (107) pour la saisie de premières données de mesure relatives à un processus de charge, ledit dispositif de mesure (107) étant prévu pour saisir les premières données de mesure en tenant compte de formats de données et d'instructions spécifiques au fabriquant et au type ; et
un dispositif de commande (105), prévu pour transformer les premières données de mesure en deuxièmes données de mesure conformément à un format de données de mesure prescrit,
où le dispositif de mesure (107) est relié au dispositif de commande (105) par une interface de communication (127) et un protocole de communication, et où le dispositif de commande (105) est prévu pour délivrer les deuxièmes données de mesure indépendamment de l'interface de communication (127) et du protocole de communication,
où le dispositif de commande (105) comprend une mémoire non volatile (115) avec une pluralité d'enregistrements, chacun de ceux-ci donnant une règle de conversion pour un appareil de mesure (107),
où le dispositif de commande (105) est prévu pour convertir les premières données de mesure en deuxièmes données de mesure conformément à une règle de conversion donnée dans un enregistrement.

2. Dispositif de charge (100) selon la revendication 1, où le dispositif de commande (105) est prévu pour stocker les deuxièmes données de mesure dans une mémoire (115), à une adresse de mémoire définie.

3. Dispositif de charge (100) selon l'une des revendications précédentes, où le dispositif de commande (105) comprend une interface (111) pour la transmission de l'enregistrement au dispositif de commande (105).

4. Dispositif de charge (100) selon l'une des revendications précédentes, où le dispositif de commande (105) comprend un microprocesseur pour le traitement de l'enregistrement, afin d'obtenir la règle de conversion donnée dans l'enregistrement.

5. Dispositif de charge (100) selon l'une des revendications précédentes, où le dispositif de commande (105) comprend une mémoire (115) pour le stockage de l'enregistrement.

6. Dispositif de charge (100) selon l'une des revendications précédentes, où le dispositif de commande (105) comprend un serveur Web pour donner la règle de conversion.

7. Dispositif de charge (100) selon l'une des revendications précédentes, où le dispositif de commande (105) est prévu pour convertir une première instruction de commande en deuxième instruction de commande conformément à une règle de conversion afin de commander le dispositif de mesure (107), et pour transmettre la deuxième instruction de commande au dispositif de mesure (107).

8. Dispositif de charge selon la revendication 7, où la première instruction de commande est une instruction de commande pour l'appel d'une information d'identification de l'appareil de mesure (107).

9. Dispositif de charge (100) selon la revendication 8, où le dispositif de commande (105) est prévu pour affecter un enregistrement à l'information d'identification.

10. Dispositif de charge (100) selon la revendication 7, où la première instruction de commande est une instruction de commande pour l'appel des premières données de mesure de l'appareil de mesure (107).

11. Dispositif de charge (100) selon l'une des revendications précédentes, où les premières données de mesure comprennent une information relative à un courant de charge, une tension de charge ou une valeur de compteur d'énergie.

12. Dispositif de charge (100) selon l'une des revendications précédentes, où le dispositif de commande (105) comprend une interface Internet (111) pour l'appel d'un enregistrement via Internet.

13. Dispositif de charge (100) selon l'une des revendications précédentes, où l'enregistrement est un fichier texte structuré.
